# EUROPÄISCHE PATENTANMELDUNG

(11) **EP 2 525 112 A1**
(43) Veröffentlichungstag der Anmeldung: **21.11.2012**
(21) Anmeldenummer: 12163826.6
(22) Anmeldetag: 12.04.2012
(51) Int. Cl.: F16C 43/06, F16C 41/04, F16C 23/08, F16C 19/34, F16C 33/36, F16C 19/30

(54) **Axialpendelrollenlager**

(30) Priorität: 17.05.2011 DE 102011075972
(71) Anmelder: Schaeffler Technologies AG & Co. KG, 91074 Herzogenaurach (DE)
(72) Erfinder: Schröder, Rainer, 97440 Egenhausen (DE); Schneider, Jürgen, 60528 Frankfurt/M. (DE); Geschwindner, Rainer, 36396 Steinau (DE)

(57) **Zusammenfassung**

Die Erfindung betrifft ein Axialpendelrollenlager (10) mit einer Wellenscheibe (12), einer Gehäusescheibe (28) und Wälzkörpern (16), die zwischen der Wellenscheibe (12) und der Gehäusescheibe (28) angeordnet sind sowie auf einer Wellenscheibenlaufbahn (22) und einer Gehäusescheibenlaufbahn (30) abrollen. Erfindungsgemäß ist das Axialpendelrollenlager (10) käfiglos ausgebildet. Infolge des nicht vorhandenen Wälzkörperkäfigs können keine Käfigbrüche oder Verschleißerscheinungen am Käfig, insbesondere in der Form von Einlaufspuren und/oder einer Riefenbildung an den Wälzkörperführungsflächen des Käfigs, auftreten. Hierdurch erhöhen sich die Verfügbarkeit und die Gebrauchsdauer des Axialpendelrollenlagers (10). Ferner verbessert sich die axiale Tragfähigkeit des Axialpendelrollenlagers (10) bei gleicher Gebrauchsdauer, da die käfiglose Ausbildung eine größere Anzahl von Wälzkörpern zulässt.

Durch eine Montagehilfe (18, 40) können die Wälzkörper (16) kurzzeitig, insbesondere während des Zusammenbauvorgangs des Axialpendelrollenlagers (10), zu einer leicht handhabbaren Montageeinheit zusammengefasst werden. Die Montagehilfe (18) als temporärer Bestandteil des Axialpendelrollenlagers (10) löst sich bevorzugt kurz nach der Erstinbetriebnahme des Axialpendelrollenlagers (10) zumindest teilweise selbsttätig auf, oder die Montagehilfe (40) wird manuell entfernt.

## Beschreibung

Die Erfindung betrifft ein Axialpendelrollenlager mit einer Wellenscheibe, einer Gehäusescheibe und Wälzkörpern, die zwischen der Wellenscheibe und der Gehäusescheibe angeordnet sind sowie auf einer Wellenscheibenlaufbahn und einer Gehäusescheibenlaufbahn abrollen.

### Hintergrund der Erfindung

Axialpendelrollenlager werden im Maschinenbau vorrangig dort eingesetzt, wo neben der Aufnahme von hohen axialen Kräften zusätzlich ein Winkelausgleich zwischen nicht vollständig fluchtenden Maschinenteilen notwendig ist. Zur Sicherstellung eines gleichmäßigen Abstandes zwischen den Wälzkörpern sind Axialpendelrollenlager mit einem Käfig zur Aufnahme und Führung der Wälzkörper ausgestattet. Wälzkörperkäfige können beispielsweise aus massivem Messing oder aus Stahlblech gefertigt sein. Bei diesen Pendelrollenlagern wirken durch die hohe Axialbeschleunigung, in Verbindung mit dem notwendigen Spiel zwischen dem Käfig, den Wälzkörpern und der Wellenscheibe, extreme mechanische Lasten auf die Käfigstege und die Führungsflächen des Käfigs ein. Infolge dieser Zug- und Druckbeanspruchung können bei Stahlblechkäfigen zum Beispiel die Stege abreißen, während bei massiven Messingkäfigen vielfach die Führungsflächen einlaufen und sich hierdurch Riefen bilden.

Axialpendelrollenlager sind in einer großen Variationsbreite bekannt. Bei diesen Wälzlagern werden näherungsweise tonnenförmige bzw. fassförmige Wälzkörper eingesetzt, die in Bezug zur Lagerachse unter einem Winkel angeordnet sind, der üblich bei ungefähr 45° liegt. Derartige Axialpendelrollenlager stellen insbesondere im Hinblick auf hohe Axialkräfte die tragfähigsten Wälzlager dar und finden daher in Schwerlastanwendungen, wie zum Beispiel in Kranstützlagern, in Lagern für Lokomotivendrehscheiben oder in Drucklagern für Schiffsantriebe weit verbreitete Anwendung. Bei diesen bekannten Axialpendelrollenlagern sind jedoch Wälzkörperkäfige zur Sicherstellung einer gleichmäßigen umfangsseitigen Beabstandung der Wälzkörper zueinander vorgesehen.

Die GB 457,411 A betrifft Verbesserungen auf dem Gebiet der Wälzlager. Bei diesem vorbekannten Wälzlager handelt es sich um ein käfigloses Nadellager. Eine Vielzahl von nadelförmigen Wälzkörpern ist dort über den Umfang einer Lagerwelle hinweg verteilt angeordnet, wobei die Wälzkörper jeweils zueinander und parallel zur Lagerachse ausgerichtet sind sowie unmittelbar auf der Lagerwelle abrollen. Die Anordnung der nadelförmigen Wälzkörper erfolgt weitgehend zwischenraumfrei, so dass benachbarte Wälzkörper jeweils unmittelbar aneinander reiben. Zur axialen Reibungsminimierung sind die Enden der Nadeln jeweils kegelförmig bzw. angespitzt ausgeführt. Die Nadeln sind von einer Innenhülse und einer diese koaxial umschließenden Außenhülse umgeben. Die gehärtete Innenhülse dient als Abrollfläche für die Nadeln, während die Außenhülse das Gehäuse des Nadellagers bildet. Die Außenhülse weist an ihren beiden Enden jeweils eine umlaufende, in Richtung der Lagerachse weisende Bordkante zur axialen Lagesicherung der nadelförmigen Wälzkörper auf. Das Nadellager ist zwar käfiglos ausgeführt, es ermöglicht jedoch nicht den Ausgleich eines etwaigen Winkelversatzes zwischen nicht vollständig fluchtenden Maschinenteilen.

Die DE 6 917 609 U hat ein einreihiges Schrägrollenlager zum Gegenstand. Dieses Schrägrollenlager ist zur beidseitigen Aufnahme von Radialkräften und von Axialkräften geeignet und weist einen Innen- und einen Außenring mit j eweils einer schräg zur Lagerachse verlaufenden Laufbahn auf. Der Innenring verfügt über ein loses Bord, während das Bord des Außenrings einstückig zu diesem ausgebildet ist. Zur Erleichterung der Montage des Wälzkörperkäfigs ist das lose Bord des Innenrings mittels eines geschlitzten Ringes, der eine u-förmige Querschnittsgeometrie aufweist, mit dem Innenring verbindbar. Auch bei diesem vorbekannten Schrägrollenlager zur vorrangigen Aufnahme von Axialkräften ist ein Käfig zur Beabstandung der Wälzkörper vorgesehen. Zum anderen ist eine Kompensation eines etwaigen Winkelversatzes nicht möglich.

### Aufgabe der Erfindung

Der Erfindung liegt die Aufgabe zugrunde, ein Axialpendelrollenlager zu schaffen, das neben einer hohen axialen Tragfähigkeit auch radiale Lasten aufnehmen kann, das einfach zu montieren ist und bei dem Beschädigungen des Wälzkörperkäfigs, insbesondere Käfigbrüche oder Verschleißerscheinungen an Käfigführungsflächen, ausgeschlossen sind.

### Zusammenfassung der Erfindung

Der Erfindung liegt die Erkenntnis zugrunde, dass bei bekannten Axialpendelrollenlagern insbesondere der Käfig eine Schwachstelle darstellt und häufig die Gebrauchsdauer verkürzende Käfigbrüche sowie Verschleißerscheinungen an den Wälzkörperführungsflächen des Käfigs auftreten.

Die Erfindung geht demnach aus von einem Axialpendelrollenlager mit einer Wellenscheibe, einer Gehäusescheibe und Wälzkörpern, die zwischen der Wellenscheibe und der Gehäusescheibe angeordnet sind sowie auf einer Wellenscheibenlaufbahn und einer Gehäusescheibenlaufbahn abrollen. Zur Lösung der gestellten Aufgabe ist gemäß der Erfindung vorgesehen, dass das Axialpendelrollenlager käfiglos ausgebildet ist

Infolge der käfiglosen Ausbildung des Axialpendelrollenlagers können Käfigbrüche und/oder andere Verschleißerscheinungen am Wälzkörperkäfig, wie zum Beispiel Einlaufspuren bzw. Riefenbildung an Wälzkörperführungsflächen des Käfigs, nicht mehr auftreten, wodurch sich die Gebrauchsdauer und die Zuverlässigkeit des Axialpendelrollenlagers erhöhen. Darüber hinaus verbessert sich die Lasttragfähigkeit des Axialpendelrollenlagers, da sich eine größere Anzahl von Wälzkörpern zwischen der Wellenscheibe und der Gehäusescheibe in das Lager einbringen lässt.

Die käfiglose Ausführung des Axialpendelrollenlagers ermöglicht ferner eine kostengünstigere Fertigung. Die bevorzugt näherungsweise tonnenförmig ausgestalteten Wälzkörper erlauben in Verbindung mit den korrespondierend hierzu ausgeführten, leicht sphärisch gekrümmten Laufbahnen den Ausgleich eines etwaigen Winkelversatzes zwischen nicht fluchtenden Maschinenteilen von bis zu 5°. Das insbesondere mit Axialkräften hochbelastbare Axialpendelrollenlager kann in vorteilhafter Weise zum Beispiel in Erdverdichtungsmaschinen eingesetzt werden.

Eine Weiterbildung des Axialpendelrollenlagers sieht vor, dass die Wälzkörper zwischenraumfrei angeordnet sind oder zwischen mindestens zwei Wälzkörpern ein Abstand besteht.

Die zwischenraumfreie Anordnung der Wälzkörper erlaubt es, die größtmögliche Anzahl von Wälzkörpern zwischen der Wellenscheibe und der Gehäusescheibe unterzubringen. Bevorzugt ist jedoch zwischen mindestens zwei Wälzkörpern ein geringer Abstand von zum Beispiel mindestens einem Millimeter vorgesehen. Hierdurch werden gegenläufige Reibbewegungen zwischen den Wälzkörpern weitgehend vermieden. Während des Betriebs des Axialpendelrollenlagers verändern sich die Abstände zwischen den Wälzkörpern dynamisch, so dass sich zwischen den Wälzkörpern im Allgemeinen zumindest geringfügig voneinander abweichende Abstände einstellen.

Bei einer weiteren vorteilhaften Ausgestaltung des Axialpendelrollenlagers sind die Wälzkörper mittels einer Montagehilfe zeitweise zu einer Einheit zusammenfassbar. Mittels der Montagehilfe werden die Wälzkörper zu einer leicht handhabbaren Montageeinheit verbunden, die im Ganzen in das Axialpendelrollenlager einsetzbar ist und durch die der Montageprozess, insbesondere bei Lagern mit großen Abmessungen, erleichtert wird. Insbesondere das Herausfallen von Wälzkörpern während des Montageprozesses ist somit ausgeschlossen.

Gemäß einer weiteren Ausgestaltung des Axialpendelrollenlagers ist die Montagehilfe mit einem Flächengebilde, insbesondere mit einem Netz und/oder mit einer Folie, aus einem Kunststoffmaterial gebildet.

Das Flächengebilde hüllt die Wälzkörper zumindest bereichsweise ein und kann aus einem schlauchartigen Netz und/oder einer Folie gebildet sein. Das Netz bzw. die Folie kann nach der Montage zur zumindest teilweisen Entfernung im einfachsten Fall aus dem Lager herausgezogen werden, sofern die Wellen- und die Gehäusescheibe sowie die Wälzkörper unter einer nicht zu hohen axialen Vorspannung stehen.

Die Montagehilfe kann zum Beispiel aus einer Schrumpffolie gebildet sein, die nach dem Aufbringen durch Erwärmung vergleichsweise fest auf die Wälzkörper aufgeschrumpft wird, wodurch die Wälzkörper zu einer gut handhabbaren Einheit verbunden werden. Als Kunststoffmaterial können bekannte thermoplastische oder gegebenenfalls auch duroplastische Kunststoffe Verwendung finden.

Gemäß einer anderen Weiterentwicklung des Axialpendelrollenlagers gemäß der Erfindung ist vorgesehen, dass die Montagehilfe mit einem Ring gebildet ist, der eine Vielzahl von Aufnahmetaschen zur zeitweiligen Lagefixierung der Wälzkörper aufweist und der aus einem Kunststoffmaterial gebildet ist.

Der bevorzugt einstückige Ring kann eine Vielzahl von Aufnahmetaschen aufweisen, die bevorzugt jeweils eine Öffnung für jeweils einen Wälzkörper aufweisen, so dass der Ring nach der Montage des Lagers leicht in seitlicher Richtung von den Wälzkörpern abgezogen werden kann. Zur weiteren Erleichterung des Abziehprozesses kann der Ring teilbar sein und eine oder mehrere Sollbruchstellen aufweisen. Der Ring kann aus den aus dem Stand der Technik hinlänglich bekannten thermoplastischen oder duroplastischen Kunststoffen hergestellt sein. Gegebenenfalls können die Kunststoffmaterialien mit einer Faserarmierung versehen sein.

Im Fall einer weiteren Ausgestaltung des Axialpendelrollenlagers ist das Kunststoffmaterial insbesondere unter dem Einfluss mindestens einer Substanz, vorzugsweise eines Schmierstoffes und/oder eines Lösungsmittels, zumindest teilweise zersetzbar. Das Netz, die Folie bzw. der Ring als Montagehilfe sind demnach bevorzugt aus einem insbesondere gegenüber Schmierstoffen nicht beständigen bzw. durch diese leicht auflösbaren Kunststoffmaterial gebildet, das außerdem über eine möglichst geringe mechanische Belastbarkeit und Temperaturbeständigkeit verfügen sollte. Hierdurch löst sich die Montagehilfe bereits nach kurzer Zeit selbsttätig auf.

Die Zersetzung bzw. die Auflösung der Montagehilfe wird durch die mechanische Mahlwirkung der auf den Laufbahnen abrollenden Wälzkörper, die zu einer Pulverisierung bzw.

Granulierung des Kunststoffmaterials führt, unterstützt. Zumindest Restmengen der so entstehenden Pulverpartikel können unter Umständen (deren hinreichende Gleit- und Schmierfähigkeit vorausgesetzt) dauerhaft im Lager verbleiben und fungieren dann z.B. als ein fester Zuschlagstoff eines in der Regel ohnehin notwendigen Lagerschmiermittels.

Alternativ kann in Abhängigkeit vom jeweils eingesetzten Kunststoffmaterial auch ein speziell hierauf abgestimmtes Lösungsmittel zum rückstandsfreien Herausspülen eingesetzt werden. Nach dem Abschluss des Spülvorgangs ist es im Allgemeinen dann jedoch erforderlich, das Lager mit einem geeigneten Schmierstoff zu versehen bzw. das Lager nachzufetten.

Gegebenenfalls kann durch ein definiertes Erhitzen des Lagers die Montagehilfe verflüssigt und so zumindest teilweise wieder aus dem Lager entfernt werden. Hierfür sind Kunststoffe für die Herstellung der Montagehilfe geeignet, die bei Temperaturen zwischen 40°C und 150°C schmelzen.

Als Kunststoffmaterialien kommen zum Beispiel Polystyrol (PS) oder Polyvinylchlorid (PVC) in Betracht, die gegenüber vielen chemischen Substanzen nur in einem relativ geringen Umfang beständig sind. Polystyrol kann darüber hinaus, beispielsweise mit Hilfe von Aceton, leicht vollständig aufgelöst und aus dem Lager herausgespült werden. Ferner können geeignete biologisch zersetzbare Kunststoffe oder relativ wenig temperaturstabile Kunststoffe, wie zum Beispiel Polyethylen (PE) und/oder (Hart-)Wachse, zur Herstellung der Monatgehilfe genutzt werden.

### Kurze Beschreibung der Zeichnungen

Die Erfindung wird im Folgenden anhand der beiliegenden Zeichnung an einer bevorzugten Ausführungsform näher erläutert. Darin zeigt
- Fig. 1: ein teilmontiertes Axialpendelrollenlager mit einer Wellenscheibe und in einer Montagehilfe zusammengefassten Wälzkörpern,
- Fig. 2: eine vergrößerte Ausschnittdarstellung des Axialpendelrollenlagers gemäß der Fig. 1,
- Fig. 3: das fertig montierte Axialpendelrollenlager mit aufgesetzter Gehäusescheibe sowie entfernter Montagehilfe, und
- Fig. 4: einen Ring mit Aufnahmetaschen für die Wälzkörper als eine alternative Ausführungsform der Montagehilfe.

### Detaillierte Beschreibung der Zeichnungen

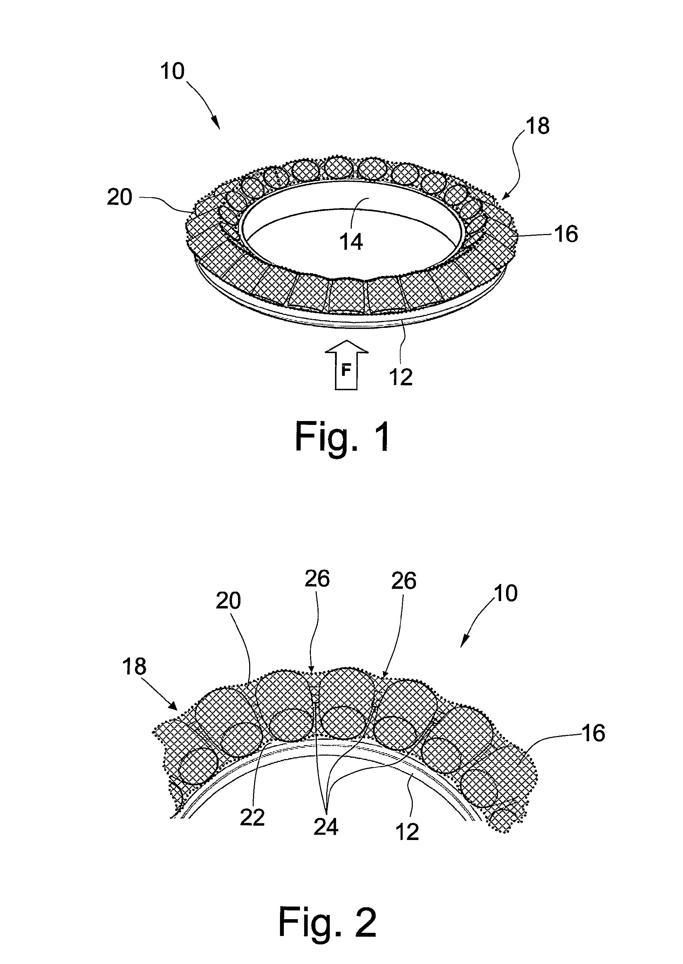

Die Fig. 1 zeigt in einer perspektivischen Darstellung ein erfindungsgemäßes Axialpendelrollenlager im teilmontierten Zustand, wobei die Wälzkörper 16 mittels einer Montagehilfe zu einer leicht handhabbaren Einheit zusammengefasst sind.

Das käfiglose Axialpendelrollenlager 10 umfasst im gezeigten teilmontierten Zustand unter anderem eine Wellenscheibe 12 mit einer Wellenscheibenbohrung 14, wobei auf der Wellenscheibe 12 eine Vielzahl von näherungsweise tonnenförmigen Wälzkörpern 16 mit jeweils gleichen Abmessungen angeordnet ist. Das Axialpendelrollenlager 10 wird vorrangig mit einer von der Wellenscheibe 12 ausgehenden Axialkraft F belastet. Die Wälzkörper 16 sind ausweislich der Darstellung der Fig. 1 (zunächst noch) gleichmäßig zueinander beabstandet über die Wellenscheibe 12 hinweg verteilt.

Zur Vereinfachung der Montage sind die einzelnen Wälzkörper 16 mittels einer temporären Montagehilfe 18 zu einer gut handhabbaren, nicht bezeichneten Montageeinheit zusammengefasst. In Fig. 1 ist die Montagehilfe 18 mit einem schlauchartigen Netz 20 aus einem thermoplastischen Kunststoffmaterial gebildet, das über die Wälzkörper 16 gezogen ist. Das die Wälzkörper 16 im Wesentlichen vollständig bedeckende Netz 20 muss über eine hinreichend hohe mechanische Stabilität verfügen, um die Wälzkörper 16 beim Transport zur Wellenscheibe 12 und bei der weiteren Lagermontage in der gezeigten Lage zusammenzuhalten. Eine zumindest bereichsweise Überdeckung der Wälzkörper 16 mit dem Netz 20 ist ausreichend, wenn insbesondere deren Herausfallen während des Montageprozesses des Axialpendelrollenlagers 10 ausgeschlossen ist.

Als thermoplastisches Kunststoffmaterial für das Netz 20 können beispielsweise Polystyrol (PS) oder Polyvinylchlorid (PVC) zum Einsatz kommen, die im Vergleich zu anderen Kunststoffen über eine nur relativ geringe Beständigkeit gegenüber Chemikalien verfügen, so dass sich das Netz 20 nach der Inbetriebnahme des Axialpendelrollenlagers 10 aufgrund der lösenden Wirkung der verwendeten Lagerschmierstoffe in der Regel nach kurzer Zeit selbsttätig auflöst. Anstelle von thermoplastischen Kunststoffen können z.B. auch nur in geringem Umfang chemikalienbeständige duroplastische Kunststoffmaterialien Verwendung finden.

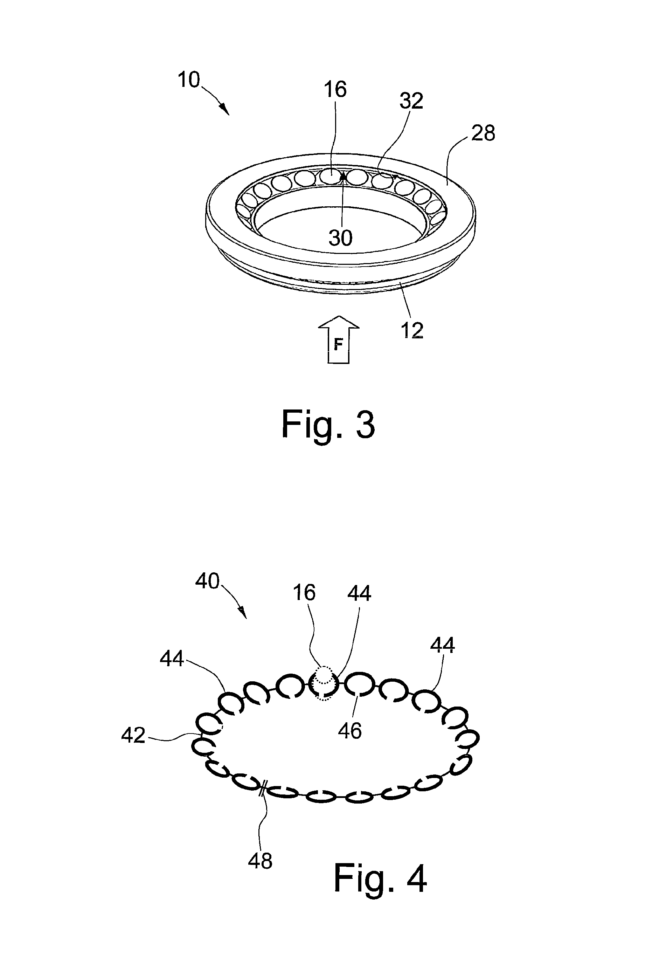

Außerdem ist es möglich, das Netz 20 nach dem Abschluss der Montage aus dem Axialpendelrollenlager 10 durch Herausziehen zumindest teilweise zu entfernen, so dass es auf die Auflösbarkeit des eingesetzten Kunststoffes nicht mehr vorrangig ankommt. Fig. 3 zeigt das Axialpendelrollenlager 10 nach dem Entfernen der Montagehilfe 18.

Abweichend von dem exemplarisch gezeigten Netz 20 als Montagehilfe 18 kann auch eine Folie aus einem leicht lösbaren thermoplastischen Kunststoffmaterial zum Einsatz kommen. Bei der Folie kann es sich auch um eine so genannte Thermo-Schrumpffolie handeln, die bei der Zufuhr von Wärme zumindest bereichsweise auf die Wälzkörper 16 infolge einer allseitigen Längenverkürzung aufschrumpft und diese hierdurch fest umschließt, so dass die gewünschte leicht handhabbare Montageeinheit entsteht.

Verfügt das zur Schaffung der Montagehilfe 18 eingesetzte thermoplastische Kunststoffmaterial über einen hinreichend niedrigen Schmelzpunkt, kann die Montagehilfe 18 durch eine definierte Temperaturerhöhung des Axialpendelrollenlagers 10 verflüssigt und auf diese Weise weitgehend rückstandsfrei entfernt werden.

Ferner kann beispielsweise eine Montagehilfe 18, die aus Polystyrol (PS) hergestellt ist, mit Aceton als Lösungsmittel vollständig aufgelöst und aus dem Axialpendelrollenlager 10 herausgespült werden, wobei aufgrund der stark entfettenden Wirkung des Acetons in der Regel ein Nachschmieren mit einem geeigneten Lagerschmierfett und/oder einem Schmieröl unabdingbar ist.

Aufgrund der Mahlwirkung der sich auf den Laufbahnen abrollenden Wälzkörper 16 kann die Montagehilfe 18 während des Betriebs des Axialpendelrollenlagers 10 zumindest teilweise zerkleinert bzw. gegebenenfalls auch pulverisiert werden, wodurch eine erhebliche Oberflächenvergrößerung eintritt und die möglichst rückstandsfreie Entfernung gefördert wird. Alternativ dazu können die so pulverisierten Kunststoffpartikel auch einfach im Axialpendelrollenlager 10 verbleiben und stellen dann ein Additiv für den im Lager ohnehin vorhandenen und notwendigen Schmierstoff dar, insbesondere in Form eines Lagerfettes oder eines Lageröls. Diese Vorgehensweise setzt jedoch ausreichende Gleit- und Schmiereigenschaften des jeweils eingesetzten Kunststoffmaterials voraus.

Fig. 2 illustriert einen vergrößerten Ausschnitt aus der Darstellung des Axialpendelrollenlagers 10 gemäß Fig. 1. Die Wälzkörper 16 sind mittels der Montagehilfe 18 zu einer nicht bezeichneten Montageeinheit zusammengefasst, die auf einer Wellenscheibenlaufbahn 22 der Wellenscheibe 12 aufliegt. Durch Abstände 24 zwischen den Wälzkörpern 16 wird ein direkter Kontakt der Wälzkörper 16 untereinander weitestgehend vermieden. Als Abstand 24 ist aufgrund der sphärisch gekrümmten Oberflächengeometrie der Wälzkörper 16 jeweils der kleinste Abstand zwischen zwei benachbarten Wälzkörpern 16 zu verstehen. Infolge der Abstände 24 ist eine gegenläufige Bewegung zwischen benachbarten Wälzkörpern 16 im Berührungsfall weitgehend ausgeschlossen.

Die Gesamtsumme aller Abstände 24 ist bevorzugt kleiner als ein nicht bezeichneter maximaler Durchmesser eines Wälzkörpers, um ungeachtet der Abstände 24 zwischen den einzelnen Wälzkörpern 16 eine möglichst dichte Besetzung der Laufbahnen 22, 30 des Axialpendelrollenlagers 10 mit den Wälzkörpern 16 zu erzielen. Im laufenden Betrieb variieren die Abstände zwischen den Wälzkörpern 16 dynamisch, so dass sich mindestens zwei Wälzkörper zumindest kurzzeitig berühren können. Im Allgemeinen werden die jeweiligen Abstände 24 zwischen den Wälzkörpern 16 während des Betriebs des Axialpendelrollenlagers 10 zumindest geringfügig ungleich sein.

Alternativ dazu können die Wälzkörper 16 auf der Wellenscheibenlaufbahn 22 auch zwischenraumfrei angeordnet sein, wodurch sich eine maximale Besetzungsdichte mit den Wälzkörpern 16 ergibt.

Zwischen den Wälzkörpern 16 sind im Netz 20 jeweils Einschnürungen 26 vorhanden. Durch diese Einschnürungen 26 werden bei der Montage in Verbindung mit der Steifigkeit des Netzes 20 die Abstände 24 weitgehend aufrechterhalten, wobei sich zugleich ein mechanisch hinreichend fester Verbund zwischen den Wälzkörpern 16 zur Schaffung der leicht handhabbaren Montageeinheit einstellt.

Fig. 3 zeigt das Axialpendelrollenlager 10 im montierten Zustand. Das Axialpendelrollenlager 10 umfasst die Wellenscheibe 12 sowie eine Gehäusescheibe 28, zwischen denen die Wälzkörper 16 aufgenommen sind. Zur Führung der Wälzkörper 16 verfügt die Gehäusescheibe 28 über eine unterseitige Gehäusescheibenlaufbahn 30. In die Gehäusescheibe 28 ist ferner eine Gehäusescheibenbohrung 32 eingebracht.

Die Laufbahnen 22, 30 der Wellenscheibe 12 und der Gehäusescheibe 28 verfügen jeweils über eine Kontur, deren Krümmungsverlauf mit der sphärisch gekrümmten Ausbildung der Raumform der Wälzkörper 16 zumindest bereichsweise übereinstimmt. Hierdurch wird ein Winkelausgleich von bis zu 5° zwischen einer nicht bezeichneten Lagerachse und einem mittels des Axialpendelrollenlagers 10 gelagerten, hier nicht dargestellten weiteren Maschinenteil, ermöglicht. Darüber hinaus dienen die Laufbahnen der Wellen- und der Gehäusescheibe 12, 28 zur Führung der Wälzkörper 16.

Das Axialpendelrollenlager 10 ist vorrangig mit der Axialkraft F belastet. Der Kraftfluss verläuft hierbei ausgehend von der Wellenscheibe 12 über die Wälzkörper 16 bis in die Gehäusescheibe 28 hinein. In der Darstellung der Fig. 3 ist die Montagehilfe nicht mehr vorhanden, d.h. sie ist zum Beispiel mittels einer der im Rahmen der Erläuterung zur Fig. 1 beschriebenen Vorgehensweisen entfernt worden. Im Fall von hinreichend großen und massereicher Wälzkörpern 16 kann die Montagehilfe unter Umständen vor dem Abschluss der Montage, d.h. vor dem Aufsetzen der Gehäusescheibe 28 entfernt werden. Nach dem möglichst vollständigen Entfernen der Montagehilfe aus dem bereits vollständig zusammengebauten Lager kann es notwendig sein, das Axialspiel des Axialpendelrollenlagers 10 neu einzustellen.

In Fig. 4 ist eine alternative Ausführungsform der Montagehilfe schematisch dargestellt. Eine Montagehilfe 40 umfasst einen Ring 42 mit einer Vielzahl von im Wesentlichen torusförmigen Aufnahmetaschen 44 für die Wälzkörper, von denen lediglich ein Wälzkörper 16 repräsentativ für alle übrigen Wälzkörper hier dargestellt ist. Die Aufnahmetaschen 44 sind gleichmäßig über den Umfang des Ringes 42 hinweg verteilt angeordnet und einstückig zu diesem ausgebildet.

Abweichend von der gezeigten Ausführungsform, bei der die Aufnahmetaschen 44 jeweils ungefähr mittig zum Ring 42 angeordnet sind, kann der Ring 42 auch tangential innenseitig oder tangential außenseitig an den Aufnahmetaschen 44 ausgebildet sein, um diese untereinander zu verbinden. Die Anzahl der Aufnahmetaschen 44 entspricht der Anzahl der von der Montagehilfe 40 aufzunehmenden Wälzkörper 16.

Um einen hinreichend festen Sitz der Wälzkörper 16 in der Montagehilfe 40 zu gewährleisten, ist die Raumform der Aufnahmetaschen 44 der Oberflächengeometrie der Wälzkörper 16 derart angepasst, dass sich vorzugsweise jeweils ein leichter Pressschluss zwischen den Aufnahmetaschen 44 und den Wälzkörpern einstellt, so dass die Wälzkörper 16 in die Aufnahmetaschen 44 einschnappen können. Nicht bezeichnete Innenflächen der Aufnahmetaschen 44 liegen hierbei zumindest bereichsweise am betreffenden Wälzkörper an.

Die Aufnahmetaschen 44 können jeweils über eine kleine Öffnung 46 bzw. Aussparung verfügen, die jeweils radial nach innen gerichtet ist, um das Abziehen bzw. das Lösen der Montagehilfe von den Wälzkörpern nach dem Abschluss des Montageprozesses des Axialpendelrollenlagers zu erleichtern.

Der Ring 42 der Montagehilfe 40 kann zusätzlich über eine Sollbruchstelle 48 verfügen, um das Entfernen aus dem Axialpendelrollenlager zu erleichtern. Anstelle der Sollbruchstelle 48 kann eine nicht dargestellte Verbindungsstelle vorgesehen sein, die es erlaubt, den Ring 42 wiederholt zu öffnen und wieder zu verschließen. Hierdurch kann die Montagehilfe 40 zeitweise in eine langgestreckte, bandförmige Form gebracht werden, um zum Beispiel deren Lagerung und Transport zu vereinfachen.

Da die Aufnahmetaschen 44 im gezeigten Ausführungsbeispiel mit den Öffnungen 46 versehen sind und die Sollbruchstelle 48 vorgesehen ist, muss die Montagehilfe 40 in dieser Ausführungsform nicht unbedingt aus einem sich zumindest teilweise selbst auflösenden Kunststoffmaterial gebildet sein.

Die Montagehilfe 40 kann jedoch auch mit demselben, sich zumindest teilweise selbsttätig auflösenden Kunststoffmaterial hergestellt sein wie das Netz 20 der im Rahmen der Beschreibung der Figuren 1 und 2 weiter oben bereits beschriebenen Montagehilfe 18. In einer solchen Konstellation sind die Ausnehmungen 46 und die optionale Sollbruchstelle 48 entbehrlich. Für den Fall, dass die Montagehilfe 40 aus einem elastischen Kunststoffmaterial (Elastomer) gebildet ist, können die Ausnehmungen 46 und die Sollbruchstelle 48 gleichfalls entfallen, da die Montaghilfe 40 dann zumindest bei nicht aufgesetzter Gehäusescheibe 28 leicht abgezogen werden kann.

Die Montagehilfe 40 kann beispielsweise mittels bekannter Spritzgussverfahren in großen Stückzahlen und dadurch kostengünstig hergestellt werden, wenn thermoplastische Kunststoffmaterialien zur Anwendung kommen.

### Bezugszeichenliste

- 10: Axialpendelrollenlager
- 12: Wellenscheibe
- 14: Wellenscheibenbohrung
- 16: Wälzkörper
- 18: Montagehilfe
- 20: Netz
- 22: Wellenscheibenlaufbahn
- 24: Abstand
- 26: Einschnürung am Netz
- 28: Gehäusescheibe
- 30: Gehäusescheibenlaufbahn
- 32: Gehäusescheibenbohrung
- 40: Montagehilfe
- 42: Ring
- 44: Aufnahmetasche für Wälzkörper
- 46: Öffnung in einer Aufnahmetasche
- 48: Sollbruchstelle

## Patentansprüche

1. Axialpendelrollenlager (10) mit einer Wellenscheibe (12), einer Gehäusescheibe (28) und Wälzkörpern (16), die zwischen der Wellenscheibe (12) und der Gehäusescheibe (28) angeordnet sind sowie auf einer Wellenscheibenlaufbahn (22) und einer Gehäusescheibenlaufbahn (30) abrollen, **dadurch gekennzeichnet, dass** das Axialpendelrollenlager (10) käfiglos ausgebildet ist.

2. Axialpendelrollenlager nach Anspruch 1, **dadurch gekennzeichnet, dass** die Wälzkörper (16) zwischenraumfrei angeordnet sind oder zwischen mindestens zwei Wälzkörpern (16) ein Abstand (24) besteht.

3. Axialpendelrollenlager nach Anspruch 1 oder 2, **dadurch gekennzeichnet, dass** die Wälzkörper (16) mittels einer Montagehilfe (18, 40) zeitweise zu einer Montageeinheit zusammenfassbar sind.

4. Axialpendelrollenlager nach Anspruch 3, **dadurch gekennzeichnet, dass** die Montagehilfe (18) mit einem Flächengebilde aus einem Kunststoffmaterial gebildet ist.

5. Axialpendelrollenlager nach Anspruch 4, **dadurch gekennzeichnet, dass** die Montagehilfe (18) mit einem Netz (20) und/oder mit einer Folie gebildet ist.

6. Axialpendelrollenlager nach einem der vorherigen Ansprüche, **dadurch gekennzeichnet, dass** die Montagehilfe (40) mit einem Ring (42) gebildet ist, der eine Vielzahl von Aufnahmetaschen (44) zur Lagefixierung der Wälzkörper (16) aufweist, und der aus einem Kunststoffmaterial gebildet ist.

7. Axialpendelrollenlager nach einem der vorherigen Ansprüche, **dadurch gekennzeichnet, dass** das Kunststoffmaterial unter dem Einfluss mindestens einer Substanz zumindest teilweise zersetzbar ist.

8. Axialpendelrollenlager nach Anspruch 7, **dadurch gekennzeichnet, dass** das Kunststoffmaterial unter dem Einfluss eines Schmierstoffes zumindest teilweise zersetzbar ist.

9. Axialpendelrollenlager nach Anspruch 7, **dadurch gekennzeichnet, dass** das Kunststoffmaterial unter dem Einfluss eines Lösungsmittels zumindest teilweise zersetzbar ist.
